# EUROPÄISCHE PATENTSCHRIFT

(11) **EP 2 109 637 B1**
(45) Veröffentlichungstag und Bekanntmachung des Hinweises auf die Patenterteilung: **25.07.2018**
(21) Anmeldenummer: 08701337.1
(22) Anmeldetag: 09.01.2008
(51) Int. Cl.: C08J 9/00, C08J 9/236, C08J 9/35, C08L 75/04

(54) **HYBRIDSYSTEME AUS GESCHÄUMTEN THERMOPLASTISCHEN ELASTOMEREN UND POLYURETHANEN**
HYBRID SYSTEMS CONSISTING OF FOAMED THERMOPLASTIC ELASTOMERS AND POLYURETHANES
SYSTÈMES HYBRIDES COMPOSÉS D'ÉLASTOMÈRES THERMOPLASTIQUES MOUSSÉS ET DE POLYURÉTHANES

(30) Priorität: 16.01.2007 EP 07100613
(43) Veröffentlichungstag der Anmeldung: 21.10.2009
(73) Patentinhaber: BASF SE, 67056 Ludwigshafen am Rhein (DE)
(72) Erfinder: PRISSOK, Frank, 49448 Lemförde (DE); SCHÜTTE, Markus, 49080 Osnabrück (DE); BRAUN, Frank, 67063 Ludwigshafen (DE)
(74) Vertreter: BASF IP Association
(86) Internationale Anmeldenummer: PCT/EP2008/050172
(87) Internationale Veröffentlichungsnummer: WO 2008/087078

(56) Entgegenhaltungen:
- WO-A-02/077083
- WO-A-2005/023920
- WO-A-2006/015440
- US-A1- 2003 181 536

## Beschreibung

Die vorliegende Erfindung betrifft ein Hybridmaterial, enthaltend eine Matrix aus Polyurethan und darin enthaltenen geschäumten Partikeln aus thermoplastischen Polyurethan, sowie ein Verfahren zur Herstellung solcher Hybridmaterialien und die Verwendung dieser Hybridmaterialien als Bodenbelag, Fahrradsattel, Polsterungen und Schuhsohlen.

Weitere Ausführungsformen der vorliegenden Erfindung sind den Ansprüchen, der Beschreibung und den Beispielen zu entnehmen. Es versteht sich, dass die vorstehend genannten und die nachstehend noch zu erläuternden Merkmale des erfindungsgemäßen Gegenstandes nicht nur in der jeweils angegebenen Kombination, sondern auch in anderen Kombinationen verwendbar sind, ohne den Rahmen der Erfindung zu verlassen.

Polyurethane werden heutzutage aufgrund ihres weiten Eigenschaftsprofils in einer Vielzahl von Anwendungen eingesetzt. Polyurethane können dabei sowohl in kompakter als auch in geschäumter Form eingesetzt werden, wobei ein sehr weiter Dichtebereich von kompakt mit einer Dichte größer 1,00 g/cm³ bis zu ca. 0,01 g/cm³ für geschäumte Körper möglich ist. Polyurethane können dabei beispielsweise in Form von Duromeren, Elastomeren, thermoplastischen Elastomeren (TPU), mikrozellulären Elastomeren, Integralschaumstoffen, Weichschaumstoffen, Hartschaumstoffen oder Halbhartschaumstoffen vorliegen. Weitere Details hierzu finden sich im "Kunststoffhandbuch, Band 7, Polyurethane", Carl Hanser Verlag, 3. Auflage 1993, Kapitel 5 bis 8 sowie 10 - 12.

Durch Kombination von Polyurethan mit anderen Materialien können auch Verbundmaterialien hergestellt werden, durch die das Einsatzgebiet des Werkstoffs "Polyurethan" noch erweitert wird. So ist es möglich, durch Einbringen von geschäumten Partikeln in eine Matrix aus Polyurethan Hybridmaterialien mit reduzierter Dichte und besonderen Eigenschaften zu erhalten und/oder die Materialkosten zu reduzieren.

Aus der US 2003 / 181 536 ist die Herstellung von Polyurethanschäumen auf der Basis von expandierbaren Kügelchen bekannt. DE 2007248 beschreibt das Aufschäumen von vernetzten Polystyrolpartikeln zusammen mit einer Polyurethan-Reaktionsmischung. DE 2122482 beschreibt das Aufschäumen von treibmittelhaltigen thermoplastischen Polymeren, wie Vinylpolymerisate, Polyethylen, Polypropylen, Polyestern, Polyethern und Methacrylaten, in Polyurethanschäumen, die vorzugsweise polyetherbasiert und vorwiegend offenzellig sind. Diese Materialien werden hauptsächlich als Polstermaterialien eingesetzt.

Nachteile solcher bekannten Materialien sind schlechte Haftung zwischen Polyurethanmatrix und geschäumten Partikeln und damit eine nur eingeschränkte Verwendbarkeit. Solche Verbundmaterialien sind beispielsweise nicht geeignet für Anwendungen, in denen das Verbundmaterial auf wiederkehrende Belastungen elastisch reagieren muss. Ein weiterer Nachteil bekannter Hybridmaterialien ist, dass Recycling von nicht sortenreinem Material nur eingeschränkt möglich ist. Weiter führt die Verwendung von Materialien mit hoher Glastemperatur, wie beispielsweise Polystyrol, als in dem Matrixmaterial enthaltene, geschäumte Partikel dazu, dass die Elastizität des Hybridmaterials unterhalb dieser Glastemperatur nur gering ist.

WO 2006/015440 offenbart Hybridmaterialien aus einer Polyurethanmatrix und darin enthaltenen geschäumten Polyurethanteilchen, beispielsweise Recyclingmaterial. Nachteile solcher Verbundmaterialien aus Polyurethan und recyceltem Polyurethanschaum ist eine nur schlechte Haftung zwischen den geschäumten Recyclingteilchen und dem Matrixmaterial. Weiter sind auch die mechanischen Eigenschaften eines solchen Materials verbesserungswürdig.

Aufgabe der vorliegenden Erfindung ist es daher, ein Hybridmaterial zu liefern, das eine verbesserte Haftung zwischen Matrixmaterial und geschäumten Partikeln zeigt.

Eine weitere Aufgabe der Erfindung ist es, ein Hybridmaterial zu liefern, das im Vergleich zu einem analogen Material mit gleicher Gesamtdichte sehr gute mechanische Eigenschaften, wie eine verbesserte Elastizität sowie eine höhere Reißfestigkeit, aufweist.

Die erfindungsgemäße Aufgabe wird gelöst durch ein Hybridmaterial nach Anspruch 1, das eine Matrix aus Polyurethan und darin enthaltenen geschäumten Partikeln aus thermoplastischem Polyurethan aufweist, wobei die geschäumten Partikel einen geschlossene Oberflächenhaut aufweisen. Dabei kann die Matrix die geschäumten Partikel ganz oder teilweise umgeben.

Materialien, bei denen ein Schaumstoff von einem Matrixmaterial umschlossen wird, werden im Rahmen dieser Erfindung als Hybridmaterialien bezeichnet. Dabei kann das Matrixmaterial aus einem kompakten Werkstoff oder ebenfalls aus einem Schaumstoff bestehen.

Polyurethan im Sinn der Erfindung umfasst alle bekannten elastischen Polyisocyanat-Polyadditionsprodukte. Diese umfassen insbesondere massive Polyisocyanat-Polyadditionsprodukte, wie viskoelastische Gele oder thermoplastische Polyurethane, und elastische Schaumstoffe auf Basis von Polyisocyanat-Polyadditionsprodukten, wie Weichschaumstoffe, Halbhartschaumstoffe oder Integralschaumstoffe. Weiter sind unter Polyurethanen im Sinn der Erfindung elastische Polymerblends, enthaltend Polyurethane und weitere Polymere, sowie Schaumstoffe aus diesen Polymerblends zu verstehen. Vorzugsweise handelt es sich bei der Matrix um ein gehärtetes, kompaktes Polyurethanbindemittel, einen elastischen Polyurethanschaumstoff oder ein viskoelastisches Gel.

Unter einem Polyurethanbindemittel ist dabei eine Mischung zu verstehen, die zu mindestens 50 Gew.-%, vorzugsweise zu mindestens 80 Gew.-% und insbesondere zu mindestens 95 Gew.-% aus einem Isocyanatgruppen aufweisenden Prepolymer, im Folgenden als Isocyanatprepolymer bezeichnet besteht. Dabei liegt die Viskosität des erfindungsgemäßen Polyurethanbindemittels vorzugsweise in einem Bereich von 500 bis 4000 mPa.s, besonders bevorzugt von 1000 bis 3000 mPa.s, gemessen bei 25 °C nach DIN 53 018.

Im Rahmen der Erfindung werden unter Polyurethan-Schaumstoffen Schaumstoffe gemäß DIN 7726 verstanden. Dabei weisen erfindungsgemäße Polyurethan-Weichschaumstoffe eine Druckspannung bei 10 % Stauchung bzw. Druckfestigkeit nach DIN 53 421 / DIN EN ISO 604 von 15 kPa und kleiner, vorzugsweise 1 bis 14 kPa und insbesondere 4 bis 14 kPa auf. Erfindungsgemäße Polyurethan-Halbhartschaumstoffe weisen eine Druckspannung bei 10 % Stauchung nach DIN 53 421 / DIN EN ISO 604 von größer 15 bis kleiner 80 kPa auf. Vorzugsweise verfügen erfindungsgemäße Polyurethan-Halbhartschaumstoffe und Polyurethan-Weichschaumstoffe über eine Offenzelligkeit nach DIN ISO 4590 von größer 85 %, besonders bevorzugt größer 90 %. Weitere Details zu erfindungsgemäßen Polyurethan-Weichschaumstoffen und Polyurethan-Halbhartschaumstoffen finden sich im "Kunststoffhandbuch, Band 7, Polyurethane", Carl Hanser Verlag, 3. Auflage 1993, Kapitel 5.

Unter elastomeren Polyurethan-Schaumstoffen sind im Rahmen dieser Erfindung Polyurethan-Schaumstoffe nach DIN 7726 zu verstehen, die nach kurzzeitiger Verformung um 50 % der Dicke nach DIN 53 577 nach 10 Minuten keine bleibende Verformung über 2 % der Ausgangsdicke aufweisen. Dabei kann es sich um einen Polyurethan-Halbhartschaumstoff oder einen Polyurethan-Weichschaumstoff handeln.

Bei Polyurethan-Integralschaumstoffen handelt es sich um Polyurethan-Schaumstoffe nach DIN 7726 mit einer Randzone, die bedingt durch den Formgebungsprozess eine höhere Dichte als der Kern aufweisen. Die über den Kern und die Randzone gemittelte Gesamtrohdichte liegt dabei vorzugsweise über 0,1 g/cm³. Auch bei Polyurethan-Integralschaumstoffen im Sinn der Erfindung kann es sich um Polyurethan-Halbhartschaumstoffe oder Polyurethan-Weichschaumstoffe handeln. Weitere Details zu erfindungsgemäßen Polyurethan-Integralschaumstoffen finden sich im "Kunststoffhandbuch, Band 7, Polyurethane", Carl Hanser Verlag, 3. Auflage 1993, Kapitel 7.

Die Dichte des Matrixmaterials beträgt vorzugsweise von 1,2 bis 0,01 g/cm³. Besonders bevorzugt ist das Matrixmaterial ein elastischer Schaumstoff oder ein Integralschaumstoff mit einer Dichte von 0,8 bis 0,1 g/cm³, insbesondere von 0,6 bis 0,3 g/cm³ oder kompaktes Material, beispielsweise ein gehärtetes Polyurethanbindemittel.

Die geschäumten Partikel bestehen dabei aus einem geschäumten thermoplastischen Polyurethanmaterial. Diese geschäumten Partikel haben vorzugsweise einen Durchmesser von 0,1 mm bis 10 cm, vorzugsweise von 0,5 mm bis 5 cm und besonders bevorzugt von 1 mm bis 2 cm und sind vorzugsweise kugelförmig oder ellipsoid. Bei nicht kugelförmigen, zum Beispiel ellipsoiden Partikeln, ist mit Durchmesser die längste Achse gemeint. Die geschäumten Partikel haben eine Dichte von vorzugsweise 0,005 bis 0,50 g/cm³, besonders bevorzugt von 0,01 bis 0,3 g/cm³ und insbesondere von 0,02 bis 0,2 g/cm³. Erfindungsgemäß weisen die geschäumten Partikel eine kompakte äußere Haut auf. Dabei ist unter einer kompakten Haut zu verstehen, dass die Schaumzellen im äußeren Bereich der geschäumten Partikel kleiner sind als in deren Innern. Besonders bevorzugt enthält der äußere Bereich der geschäumten Partikel keine Poren.

Vorzugsweise basieren die geschäumten Partikel auf einem thermoplastischen Polyurethan, zu dessen Herstellung Polytetrahydrofuran eingesetzt wurde. Das Molekulargewicht des eingesetzten Polytetrahydrofurans beträgt vorzugsweise 600 bis 2500 g/mol. In einer weiteren bevorzugten Ausführungsform wird zur Herstellung der geschäumten Partikel ein Polyesterpolyalkohol mit einem Molekulargewicht von 500 bis 2500 g/mol, vorzugsweise 600 bis 900 g/mol, eingesetzt.

Ein Hybridmaterial, enthaltend eine Matrix aus Polyurethan und darin enthaltenen geschäumten Partikeln aus thermoplastischen Polyurethan, wird vorzugsweise hergestellt, indem man (a) Polyisocyanate mit (b) Verbindungen mit gegenüber Isocyanaten reaktiven Wasserstoffatomen, (c') expandierbaren Partikeln aus thermoplastischem Polyurethan, die Treibmittel in dispergierter oder gelöster Form enthalten, sowie gegebenenfalls (d) Kettenverlängerern und/oder Vernetzungsmitteln, (e) Katalysatoren, (f) Treibmitteln und (g) weiteren Additiven vermischt und zum Hybridmaterial umsetzt, wobei die Umsetzung unter Bedingungen erfolgt, die zur Expansion der expandierbaren Partikel (c') führen.

In einer weiteren Ausführungsform der Erfindung wird das erfindungsgemäße Hybridmaterial vorzugsweise hergestellt, indem man (a) Polyisocyanate mit (b) Verbindungen mit gegenüber Isocyanaten reaktiven Wasserstoffatomen, (c") expandierten Partikeln aus thermoplastischem Polyurethan sowie gegebenenfalls (d) Kettenverlängerern und/oder Vernetzungsmitteln, (e) Katalysatoren, (f) Treibmitteln und (g) weiteren Additiven vermischt und zum Hybridmaterial umsetzt.

Die zur Herstellung der erfindungsgemäßen Polyurethanverbundstoffe verwendeten organischen und/oder modifizierten Polyisocyanate (a) umfassen die aus dem Stand der Technik bekannten aliphatischen, cycloaliphatischen und aromatischen zwei- oder mehrwertigen Isocyanate (Bestandteil α-1) sowie beliebige Mischungen daraus. Beispiele sind 4,4'-Diphenylmethandiisocyanat, 2,4'-Diphenylmethandiisocyanat, die Mischungen aus monomeren Diphenylmethandiisocyanaten und höherkernigen Homologen des Diphenylmethandiisocyanats (Polymer-MDI), Tetramethylendiisocyanat, Hexa-methylendiisocyanat (HDI), Isophorondiisocyanat (IPDI), 2,4- oder 2,6-Toluylendiisocyanat (TDI) oder Mischungen der genannten Isocyanate.

Bevorzugt wird 4,4'-MDI verwendet. Das bevorzugt verwendete 4,4'-MDI kann 0 bis 20 Gew.-% 2,4' MDI und geringe Mengen, bis etwa 10 Gew.-%, allophanat- oder uretoniminmodifizierte Polyisocyanate enthalten. Es können auch geringe Mengen Polyphenylenpolymethylenpolyisocyanat (Polymer-MDI) eingesetzt werden. Die Gesamtmenge dieser hochfunktionellen Polyisocyanate sollte 5 Gew.-% des eingesetzten Isocyanats nicht überschreiten.

Die Polyisocyanatkomponente (a) wird bevorzugt in Form von Polyisocyanatprepolymeren eingesetzt. Diese Polyisocyanatprepolymere sind erhältlich, indem vorstehend beschriebene Polyisocyanate (a-1), beispielsweise bei Temperaturen von 30 bis 100 °C, bevorzugt bei etwa 80 °C, mit Polyolen (a-2), zum Prepolymer umgesetzt werden. Vorzugsweise wird zur Herstellung der erfindungsgemäßen Prepolymere 4,4'-MDI zusammen mit uretoniminmodifiziertem MDI und handelsüblichen Polyolen auf Basis von Polyestern, beispielsweise ausgehend von Adipinsäure, oder Polyethern, beispielsweise ausgehend von Ethylenoxid und/oder Propylenoxid, verwendet.

Polyole (a-2) sind dem Fachmann bekannt und beispielsweise beschrieben im "Kunststoffhandbuch, Band 7, Polyurethane", Carl Hanser Verlag, 3. Auflage 1993, Kapitel 3.1.

Prepolymere auf Etherbasis werden vorzugsweise erhalten durch Umsetzung von Polyisocyanaten (a-1), besonders bevorzugt 4,4'-MDI, mit 2- bis 3-funktionellen Polyoxypropylen- und/oder Polyoxypropylen-Polyoxyethylenpolyolen. Ihre Herstellung erfolgt zumeist durch die allgemein bekannte basisch katalysierte Anlagerung von Propylenoxid allein oder im Gemisch mit Ethylenoxid an H-funktionelle, insbesondere OH-funktionelle Startsubstanzen. Als Startsubstanzen dienen beispielsweise Wasser, Ethylenglykol oder Propylenglykol beziehungsweise Glycerin oder Trimethylolpropan. Weiter können als Katalysatoren auch Multimetallcyanidverbindungen, sogenannte DMC-Katalysatoren, eingesetzt werden. Beispielsweise können als Komponente (a-2) Polyether verwendet werden, wie sie nachstehend unter (b) beschrieben sind.

Bei Verwendung von Ethylenoxid/Propylenoxidmischungen wird das Ethylenoxid bevorzugt in einer Menge von 10-50 Gew.-%, bezogen auf die Gesamtmenge an Alkylenoxid, eingesetzt. Der Einbau der Alkylenoxide kann hierbei blockweise oder als statistisches Gemisch erfolgen. Besonders bevorzugt ist der Einbau eines Ethylenoxid-Endblocks ("EO-cap"), um den Gehalt an reaktiveren primären OH-Endgruppen zu erhöhen. Das zahlenmittlere Molekulargewicht der Polyole (a-2) liegt vorzugsweise zwischen 1750 und 4500 g/mol.

Gegebenenfalls werden den genannten Polyolen bei der Herstellung der Isocyanatprepolymere übliche Kettenverlängerer oder Vernetzungsmittel zugegeben. Solche Substanzen sind im Folgenden unter d) beschrieben. Besonders bevorzugt werden als Kettenverlängerer oder Vernetzungsmittel Dipropylenglycol oder Tripropylenglycol eingesetzt.

Höhermolekulare Verbindungen b) mit mindestens zwei gegen Isocyanatgruppen reaktiven H-Atomen können beispielsweise Polyetherole oder Polyesterole sein.

Polyetherole werden nach bekannten Verfahren hergestellt, beispielsweise durch anionische Polymerisation mit Alkalihydroxiden oder Alkalialkoholaten als Katalysatoren und unter Zusatz mindestens eines Startermoleküls, das 2 bis 3 reaktive Wasserstoffatome gebunden enthält, oder durch kationische Polymerisation mit Lewis-Säuren, wie Antimonpentachlorid oder Borfluorid-Etherat aus einem oder mehreren Alkylenoxiden mit 2 bis 4 Kohlenstoffatomen im Alkylenrest. Geeignete Alkylenoxide sind beispielsweise Tetrahydrofuran, 1,3-Propylenoxid, 1,2- bzw. 2,3-Butylenoxid und vorzugsweise Ethylenoxid und 1,2-Propylenoxid. Weiter können als Katalysatoren auch Multimetallcyanidverbindungen, sogenannte DMC-Katalysatoren, eingesetzt werden. Die Alkylenoxide können einzeln, alternierend nacheinander oder als Mischungen verwendet werden. Bevorzugt werden Mischungen aus 1,2-Propylenoxid und Ethylenoxid, wobei das Ethylenoxid in Mengen von 10 bis 50 % als Ethylenoxid-Endblock eingesetzt wird ("EO-cap"), so daß die entstehenden Polyole zu über 70 % primäre OH-Endgruppen aufweisen.

Als Startermolekül kommen Wasser oder 2- und 3-wertige Alkohole, wie Ethylenglykol, 1,2- und 1,3-Propandiol, Diethylenglykol, Dipropylenglykol, 1,4-Butandiol, Glycerin oder Trimethylolpropan in Betracht.

Die Polyetherpolyole, vorzugsweise Polyoxypropylen-polyoxyethylen-polyole, besitzen eine Funktionalität von 2 bis 3 und Molekulargewichte von 1.000 bis 8.000, vorzugsweise von 2.000 bis 6.000 g/mol.

Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, mehrwertigen Alkoholen, vorzugsweise Diolen, mit 2 bis 12 Kohlenstoffatomen, vorzugsweise 2 bis 6 Kohlenstoffatomen, hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35: 35 bis 50 : 20 bis 32 Gew.-Teilen, und insbesondere Adipinsäure. Beispiele für zwei und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. ω-Hydroxycapronsäure.

Zur Herstellung der Polyesterpolyole können die organischen, z.B. aromatischen und vorzugsweise aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a. in der Schmelze bei Temperaturen von 150 bis 250°C, vorzugsweise 180 bis 220°C, gegebenenfalls unter vermindertem Druck, bis zu der gewünschten Säurezahl, die vorzugsweise kleiner als 10, besonders bevorzugt kleiner als 2 ist, polykondensiert werden. Nach einer bevorzugten Ausführungsform wird als Veresterungsgemisch bei den oben genannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol zur azeotropen Abdestillation des Kondensa-tionswassers durchgeführt werden. Zur Herstellung der Polyesterpolyole werden die organischen Polycarbonsäuren und/oder -derivate und mehrwertigen Alkohole vorteilhafterweise im Molverhältnis von 1 :1 bis 1,8, vorzugsweise 1 :1,05 bis 1,2 polykondensiert.

Die erhaltenen Polyesterpolyole besitzen vorzugsweise eine Funktionalität von 2 bis 4, insbesondere von 2 bis 3, und ein Molekulargewicht von 480 bis 3000, vorzugsweise 1000 bis 3000 g/mol.

Vorzugsweise werden als höhermolekulare Verbindung b) Mischungen, enthaltend Polyetherole und Polyesterole eingesetzt.

Als Polyole eignen sich ferner polymermodifizierte Polyole, vorzugsweise polymermodifizierte Polyesterole oder Polyetherole, besonders bevorzugt Pfropf-Polyether- bzw. Pfropf-Polyesterole, insbesondere Pfropf-Polyetherole. Hierbei handelt es sich um ein sogenanntes Polymerpolyol, welches üblicherweise einen Gehalt an, bevorzugt thermoplastischen, Polymeren von 5 bis 60 Gew.-%, bevorzugt 10 bis 55 Gew.-%, besonders bevorzugt 30 bis 55 Gew.-% und insbesondere 40 bis 50 Gew.-%, aufweist. Diese Polymerpolyesterole sind beispielsweise in WO 05/098763 und EP-A-250 351 beschrieben und werden üblicherweise durch radikalische Polymerisation von geeigneten olefinischen Monomeren, beispielsweise Styrol, Acrylnitril, (Meth)Acrylaten, (Meth)Acrylsäure und/oder Acrylamid, in einem als Pfropfgrundlage dienenden Polyesterol hergestellt. Die Seitenketten entstehen im Allgemeinen durch Übertragung der Radikale von wachsenden Polymerketten auf Polyesterole oder Polyetherole. Das Polymer-Polyol enthält neben dem Propfcopolymerisaten überwiegend die Homopolymere der Olefine, dispergiert in unverändertem Polyesterol bzw. Polyetherol.

In einer bevorzugten Ausführungsform werden als Monomere Acrylnitril, Styrol, Acrylnitril und Styrol, insbesondere bevorzugt ausschließlich Styrol verwendet. Die Monomere werden gegebenenfalls in Gegenwart weiterer Monomere, eines Makromers, eines Moderators und unter Einsatz eines Radikal-Initiators, meist Azo- oder Peroxidverbindungen, in einem Polyesterol oder Polyetherol als kontinuierlicher Phase polymerisiert. Dieses Verfahren ist beispielsweise in DE 111 394, US 3 304 273, US 3 383 351, US 3 523 093, DE 1 152 536 und DE 1 152 537 beschrieben.

Während der radikalischen Polymerisation werden die Makromere mit in die Copolymerkette eingebaut. Dadurch bilden sich Blockcopolymere mit einem Polyester- bzw. Polyether- und einem Poly-acrylnitril-styrol-Block, welche in der Grenzfläche von kontinuierlicher Phase und dispergierter Phase als Phasenvermittler wirken und das Agglomerieren der Polymerpolyesterolpartikel unterdrücken. Der Anteil der Makro-mere beträgt üblicherweise 1 bis 20 Gew.-%, bezogen auf das Gesamtgewicht der zur Herstellung des Polymerpolyols eingesetzten Monomere.

Ist in der höhermolekularen Verbindung b) Polymerpolyol enthalten, liegt dies vorzugsweise zusammen mit weiteren Polyolen vor, beispielsweise Polyetherolen, Polyesterolen oder Mischungen aus Polyetherolen und Polyesterolen. Besonders bevorzugt ist der Anteil an Polymerpolyol größer als 5 Gew.-%, bezogen auf das Gesamtgewicht der Komponente (b). Die Polymerpolyole können beispielsweise, bezogen auf das Gesamtgewicht der Komponente (b) in einer Menge von 7 bis 90 Gew.-%, oder von 11 bis 80 Gew.-% enthalten sein. Besonders bevorzugt handelt es sich bei dem Polymerpolyol um Polymerpolyesterol oder Polymerpolyetherol.

Als expandierbare Partikeln (c') aus thermoplastischem Polyurethan, die Treibmittel in dispergierter oder gelöster Form enthalten, können beispielsweise mit Treibmittel imprägnierte Partikel aus thermoplastischem Polyurethan verwendet werden. Solche Partikel und deren Herstellung sind beispielsweise in WO 94/20568 und WO 2007/082838 beschrieben.

Besonders bevorzugt werden zur Herstellung der expandierbaren Partikel (c') thermoplastische Polyurethane eingesetzt, bei denen der Schmelzbereich bei einer DSC-Messung mit einer Aufheizrate von 20 K/min unterhalb von 130 °C, besonders bevorzugt unterhalb von 120 °C beginnt und bei denen das thermoplastische Polyurethan (auch als TPU bezeichnet) bei 190 °C und einem Auflagegewicht von 21,6 kg nach DIN EN ISO 1133 höchstens eine Schmelzflussrate (MFR) von 250 g/10 min, besonders bevorzugt eine Schmelzflussrate von kleiner 200 g/10 min aufweist. Vorzugsweise weist das treibmittelhaltige thermoplastische Polyurethan einen mittleren Durchmesser von 0,1 bis 10 mm auf.

Ein solches thermoplastisches Polyurethan basiert bevorzugt auf einem Polyalkohol, besonders bevorzugt auf Polyetherdiol. Dabei kommt besonders bevorzugt Polytetrahydrofuran in Betracht. Besonders bevorzugt basiert das TPU auf Polytetrahydrofuran mit einem Molekulargewicht zwischen 600 g/mol und 2500 g/mol. Die Polyalkohole können sowohl einzeln als auch in Mischung untereinander zur Anwendung kommen.

Alternativ konnten gute Ergebnisse erzielt werden mit TPU, das auf Polyesteralkohol, bevorzugt Polyesterdiol, bevorzugt auf der Basis von Adipinsäure und Butan-1,4-diol, mit einem Molekulargewicht zwischen 500 und 2500 g/mol, besonders bevorzugt auf 600 g/mol und 900 g/mol basiert.

Die Herstellung von erfindungsgemäßem thermoplastischem Polyurethan erfolgt beispielsweise durch Umsetzung von Isocyanaten (c1) mit gegenüber Isocyanaten reaktiven Verbindungen mit einem Molekulargewicht von 500 bis 10000 (c2) und gegebenenfalls Kettenverlängerungsmitteln mit einem Molekulargewicht von 50 bis 499 (c3), gegebenenfalls in Gegenwart von Katalysatoren (c4) und/oder von üblichen Hilfs- und/oder Zusatzstoffen (c5).

Als organische Isocyanate (c1) können allgemein bekannte aliphatische, cycloaliphatische, araliphatische und/oder aromatische Isocyanate, bevorzugt Diisocyanate eingesetzt werden, beispielsweise Tri-, Tetra-, Penta-, Hexa-, Hepta- und/oder Oktamethylendiisocyanat, 2-Methylpentamethylen-diisocyanat-1,5, 2-Ethyl-butylen-diisocyanat-1,4, Pentamethylen-diisocyanat-1,5, Butylendiisocyanat-1,4, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexan-diisocyanat, 1-Methyl-2,4- und/oder -2,6-cyclohexan-diisocyanat und/oder 4,4'-, 2,4'- und 2,2'-Dicyclohexylmethan-diisocyanat, 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3'-Dimethyl-diphenyl-diisocyanat, 1,2-Diphenylethandiisocyanat und/oder Phenylendiisocyanat.

Als gegenüber Isocyanaten reaktive Verbindungen (c2) können die allgemein bekannten gegenüber Isocyanaten reaktiven Verbindungen eingesetzt werden, beispielsweise Polyesterole, Polyetherole und/oder Polycarbonatdiole, die üblicherweise auch unter dem Begriff "Polyole" zusammengefasst werden, mit zahlenmittleren Molekulargewichten von 500 bis 8000, bevorzugt 600 bis 6000, insbesondere 800 bis 4000 g/mol, und bevorzugt einer mittleren Funktionalität von 1,8 bis 2,3, bevorzugt 1,9 bis 2,2, insbesondere 2 sowie Mischungen daraus.

In einer besonders bevorzugten Ausführungsform besteht die gegenüber Isocyanaten reaktive Verbindung (c2) aus einem Polytetrahydrofuran mit einem zahlenmittleren Molekulargewicht von 600 bis 2500 g/mol.

In einer weiteren besonders bevorzugten Ausführungsform besteht die gegenüber Isocyanaten reaktive Verbindung (c2) aus einem Polyesteralkohol bevorzugt Polyesterdiol, bevorzugt auf der Basis von Adipinsäure und Butan-1,4-diol, mit einem zahlenmittleren Molekulargewicht zwischen 500 und 2500 g/mol, besonders bevorzugt auf 600 g/mol und 900 g/mol

Als Kettenverlängerungsmittel (c3) können allgemein bekannte aliphatische, araliphatische, aromatische und/oder cycloaliphatische Verbindungen mit einem Molekulargewicht von 50 bis 499, bevorzugt 2-funktionelle Verbindungen, eingesetzt werden, beispielsweise Diamine und/oder Alkandiole mit 2 bis 10 C-Atomen im Alkylenrest, insbesondere Butandiol-1,4, Hexandiol-1,6 und/oder Di-, Tri-, Tetra-, Penta-, Hexa-, Hepta-, Okta-, Nona- und/oder Dekaalkylenglykole mit 3 bis 8 Kohlenstoffatomen, bevorzugt entsprechende Oligo- und/oder Polypropylenglykole, wobei auch Mischungen der Kettenverlängerer eingesetzt werden können.

Als geeignete Katalysatoren (c4), welche insbesondere die Reaktion zwischen den NCO-Gruppen der Diisocyanate (c1) und den Hydroxylgruppen der Aufbaukomponenten (c2) und (c3) beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z.B. Eisen-(III)- acetylacetonat, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche einsetzbar. Die Katalysatoren werden üblicherweise in Mengen von 0,0001 bis 0,1 Gew.-Teilen pro 100 Gew.-Teile Polyhydroxylverbindung (c2) eingesetzt.

Neben Katalysatoren (c4) können den Aufbaukomponenten (c1) bis (c3) auch übliche Hilfsmittel und/oder Zusatzstoffe (c5) hinzugefügt werden. Genannt seien beispielsweise Treibmittel, oberflächenaktive Substanzen, Füllstoffe, Flammschutzmittel, Keimbildungsmittel, Oxidationsstabilisatoren, Gleit- und Entformungshilfen, Farbstoffe und Pigmente, gegebenenfalls zusätzlich zu den erfindungsgemäßen Stabilisatorengemischte weitere Stabilisatoren, z.B. gegen Hydrolyse, Licht, Hitze oder Verfärbung, anorganische und/oder organische Füllstoffe, Verstärkungsmittel und Weichmacher.

Neben den genannten Komponenten (c1) und (c2) und gegebenenfalls (c3), (c4) und (c5) können auch Kettenregler, üblicherweise mit einem Molekulargewicht von 31 bis 499 g/mol, eingesetzt werden. Solche Kettenregler sind Verbindungen, die lediglich eine gegenüber Isocyanaten reaktive funktionelle Gruppe aufweisen, wie z. B. monofunktionelle Alkohole, monofunktionelle Amine und/oder monofunktionelle Polyole. Durch solche Kettenregler kann ein Fließverhalten, insbesondere bei TPUs, gezielt eingestellt werden. Kettenregler können im Allgemeinen in einer Menge von 0 bis 5, bevorzugt 0,1 bis 1 Gew.-Teile, bezogen auf 100 Gew.-Teile der Komponente (c2) eingesetzt werden und fallen definitionsgemäß unter die Komponente (c3).

Die Umsetzung kann bei üblichen Kennzahlen erfolgen, bevorzugt bei einer Kennzahl von 60 bis 120, besonders bevorzugt bei einer Kennzahl von 80 bis 110. Die Kennzahl ist definiert durch das Verhältnis der insgesamt bei der Umsetzung eingesetzten Isocyanatgruppen der Komponente (c1) zu den gegenüber Isocyanaten reaktiven Gruppen, d.h. den aktiven Wasserstoffen, der Komponenten (c2) und (c3). Bei einer Kennzahl von 100 kommt auf eine Isocyanatgruppe der Komponente (c1) ein aktives Wasserstoffatom, d.h. eine gegenüber Isocyanaten reaktive Gruppe, der Komponenten (c2) und (c3). Bei Kennzahlen über 100 liegen mehr Isocyanatgruppen als OH-Gruppen vor.

Die Herstellung der TPU kann nach den bekannten Verfahren kontinuierlich, beispielsweise mit Reaktionsextrudern oder dem Bandverfahren nach One-shot oder dem Prepolymerverfahren, oder diskontinuierlich nach dem bekannten Prepolymerprozess erfolgen. Bei diesen Verfahren können die zur Reaktion kommenden Komponenten (c1), (c2) und gegebenenfalls (c3), (c4) und/oder (c5) nacheinander oder gleichzeitig miteinander vermischt werden, wobei die Reaktion unmittelbar einsetzt.

Beim Extruderverfahren werden die Aufbaukomponenten (c1), (c2) sowie gegebenenfalls (c3), (c4) und/oder (c5) einzeln oder als Gemisch in den Extruder eingeführt, z.B. bei Temperaturen von 100 bis 280°C, vorzugsweise 140 bis 250°C zur Reaktion gebracht, das erhaltene TPU wird extrudiert, abgekühlt und granuliert. Gegebenenfalls kann es zweckmäßig sein, das erhaltene TPU vor der Weiterverarbeitung bei 80 bis 120°C, vorzugsweise 100 bis 110°C über einen Zeitraum von 1 bis 24 Stunden zu tempern.

Zur Herstellung der expandierbaren Partikel (c') aus thermoplastischem Polyurethan wird das erfindungsgemäße TPU vorzugsweise im Suspensions- oder Extrusionsverfahren mit Treibmittel beladen.

Beim Suspensionsverfahren wird das thermoplastische Polyurethan als Granulat eingesetzt und mit Wasser, einem Suspensionshilfsmittel und dem Treibmittel in einem geschlossenen Reaktor bis über die Erweichungstemperatur erhitzt. Dabei werden die Polymerpartikel mit dem Treibmittel imprägniert. Vorzugsweise ist die Imprägniertemperatur dabei größer als 100 °C, besonders bevorzugt ist diese im Bereich von 100 bis 150 °C und insbesondere von 110 bis 145 °C. Bei den Imprägnierbedingungen diffundiert Treibmittel in die Polymergranulatpartikel hinein. Die Imprägnierdauer beträgt im Allgemeinen 0,5 bis 10 Stunden. Anschließend wird die heiße Suspension abgekühlt, wobei sich die Partikel unter Einschluss des Treibmittels verfestigen, und der Reaktor entspannt. Man erhält expandierbare TPU-Partikel, die schließlich in üblicher Weise aus der Suspension abgetrennt werden. Anhaftendes Wasser wird in der Regel durch Trocknen, z.B. im Stromtrockner, entfernt. Falls erforderlich kann man davor oder danach anhaftendes Suspensionshilfsmittel entfernen, indem man die Partikel mit einem geeigneten Reagens behandelt. Beispielsweise kann man mit einer Säure, wie Salpetersäure, Salzsäure oder Schwefelsäure, behandeln, um säurelösliche Suspensionshilfsmittel, z.B. Metallcarbonate oder Tricalciumphosphat, zu entfernen.

Als TPU-Granulat eignet sich beispielsweise ein sogenanntes Minigranulat mit einem bevorzugten mittleren Durchmesser von 0,2 bis 10, insbesondere von 0,5 bis 5 mm. Dieses meist zylinderförmige oder runde Minigranulat wird hergestellt durch Extrudieren des TPU und ggf. weiteren Zusatzstoffen, Auspressen aus dem Extruder, gegebenenfalls Abkühlen und Granulieren. Bei zylinderförmigem Minigranulat beträgt die Länge bevorzugt 0,2 bis 10, insbesondere 0,5 bis 5 mm.

Als Treibmittel für das Suspensionsverfahren verwendet man bevorzugt organische Flüssigkeiten oder anorganische Gase oder Gemische davon. Dabei kommen als organische Flüssigkeiten halogenierte Kohlenwasserstoffe in Frage, bevorzugt sind jedoch gesättigte, aliphatische Kohlenwasserstoffe, insbesondere solche mit 3 bis 8 C-Atomen, wie Butan und Pentan. Geeignete anorganische Gase sind Stickstoff, Luft, Ammoniak oder Kohlendioxid. Weiterhin können Mischungen der genannten Treibmittel eingesetzt werden. Die Treibmittelmenge beträgt bevorzugt 0,1 bis 40, insbesondere 0,5 bis 35 und besonders bevorzugt 1 bis 30 Gew.-Teile, bezogen auf 100 Gew.-Teile eingesetztes TPU.

Als Suspensionshilfsmittel eignen sich wasserunlösliche anorganische Stabilisatoren, wie Tricalciumphosphat, Magnesiumpyrophosphat, Metallcarbonate; ferner Polyvinylalkohol und Tenside, wie Natriumdodecylarylsulfonat. Sie werden üblicherweise in Mengen von 0,05 bis 10 Gew.-%, bezogen auf das thermoplastische Polyurethan, verwendet.

Beim Extrusionsverfahren wird das thermoplastische Polyurethan in einem Extruder unter Aufschmelzen mit einem Treibmittel vermischt, das dem Extruder zugeführt wird. Die treibmittelhaltige Mischung wird unter solchen Druck- und Temperaturbedingungen ausgepresst und granuliert, dass das dieses nicht expandiert. Eine technisch günstige Methode ist die Unterwassergranulierung in einem Wasserbad, das eine Temperatur unter 100°C aufweist und unter einem Druck von mindestens 2 bar (absolut) steht. Die Temperatur darf nicht zu tief sein, da sonst die Schmelze an der Düsenplatte erstarrt, und sie darf nicht zu hoch sein, da sonst die Schmelze expandiert. Je höher der Siedepunkt des Treibmittels und je geringer die Treibmittelmenge ist, desto höher kann die Wassertemperatur und desto niedriger kann der Wasserdruck sein. Bei den besonders bevorzugten Treibmitteln Pentan oder Butan liegt die optimale Wasserbadtemperatur bei 30 bis 60°C und der optimale Wasserdruck bei 8 bis 12 bar (absolut). Statt Wasser kann man auch andere geeignete Kühlmedien verwenden. Ebenso kann man eine Wasserringgranulierung anwenden. Dabei ist der Schneidraum derart eingekapselt, dass die Granuliervorrichtung unter Druck betrieben werden kann. Man erhält auf diese Weise expandierbare Partikel aus thermoplastischem Polyurethan, die anschließend vom Wasser abgetrennt und ggf. getrocknet werden.

Als Extruder kommen alle üblichen Schneckenmaschinen in Betracht, insbesondere Einschnecken- und Doppelschneckenextruder (z.B. Typ ZSK von Fa. Werner & Pfleiderer), Ko-Kneter, Kombiplast-Maschinen, MPC-Knetmischer, FCM-Mischer, KEX-Knetschneckenextruder und Scherwalzenextruder, wie sie z.B. in Saechtling (Hg.), Kunststoff-Taschenbuch, 27. Auflage, Hanser-Verlag München 1998, Kap. 3.2.1 und 3.2.4, beschrieben sind. Der Extruder wird üblicherweise bei einer Temperatur betrieben, bei der das TPU als Schmelze vorliegt, beispielsweise bei 150 bis 250, insbesondere 180 bis 210°C. Drehzahl, Länge, Durchmesser und Ausgestaltung der Extruderschnecke(n), zugeführte Mengen und Extruderdurchsatz werden in bekannter Weise derart gewählt, dass im extrudierten TPU die Zusatzstoffe gleichmäßig verteilt sind.

Beim Extrusionsverfahren verwendet man als Treibmittel bevorzugt flüchtige organische Verbindungen mit einem Siedepunkt bei Normaldruck 1013 mbarvon-25 bis 150, insbesondere - 10 bis 125°C. Gut geeignet sind Kohlenwasserstoffe, die vorzugsweise halogenfrei sind, insbesondere C₄₋₁₀-Alkane, beispielsweise die Isomere des Butans, Pentans, Hexans, Heptans und Octans, besonders bevorzugt s-Pentan. Geeignete Treibmittel sind außerdem sterisch anspruchsvollere Verbindungen wie Alkohole, Ketone, Ester, Ether und organische Carbonate. Weiter können auch Mischungen der genannten Treibmittel verwendet werden. Diese Treibmittel werden vorzugsweise in einer Menge von 0,1 bis 40, besonders bevorzugt 0,5 bis 35 und insbesondere 1 bis 30 Gew.-Teile, bezogen auf 100 Gew.-Teile eingesetztes thermoplastisches Poly-urethan, eingesetzt.

Werden im erfindungsgemäßen Verfahren zur Herstellung des erfindungsgemäßen Hybridmaterials anstelle von expandierbaren Partikeln (c') aus thermoplastischem Polyurethan bereits expandierte Partikel (c") aus thermoplastischem Polyurethan eingesetzt, werden diese vorzugsweise durch Expansion der expandierbaren Partikel (c') erhalten, beispielsweise wenn beim Suspensionsverfahren das imprägnierte Granulat bei Temperaturen oberhalb der Erweichungstemperatur des thermoplastischen Polyurethans entspannt wird oder wenn beim Extrusionsverfahren der Austrag des Extruders nicht gekühlt wird.

Die erfindungsgemäßen Hybridmaterialien können ohne oder unter Mitverwendung von (d) Kettenverlängerungs- und/oder Vernetzungsmitteln hergestellt werden. Zur Modifizierung der mechanischen Eigenschaften, z.B. der Härte, kann sich jedoch der Zusatz von Kettenverlängerungsmitteln, Vernetzungsmitteln oder gegebenenfalls auch Gemischen davon als vorteilhaft erweisen. Dabei handelt es sich bei Kettenverlängerern und/oder Vernetzungsmittel um Substanzen mit einem Molekulargewicht von vorzugsweise kleiner 400 g/mol, besonders bevorzugt von 60 bis 400 g/mol, wobei Kettenverlängerer 2 gegenüber Isocyanaten reaktive Wasserstoffatome und Vernetzungsmittel 3 gegenüber Isocyanat reaktive Wasserstoffatome aufweisen. Diese können einzeln oder in Form von Mischungen eingesetzt werden. Vorzugsweise werden Diole und/oder Triole mit Molekulargewichten kleiner als 400, besonders bevorzugt von 60 bis 300 und insbesondere 60 bis 150 eingesetzt. In Betracht kommen beispielsweise aliphatische, cycloaliphatische und/oder araliphatische Diole mit 2 bis 14, vorzugsweise 2 bis 10 Kohlenstoffatomen, wie Ethylenglykol, Propandiol-1,2, Propandiol-1,3, Butandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxyethyl)-hydrochinon, Triole, wie 1,2,4-, 1,3,5-Trihydroxycyclohexan, Glycerin und Trimethylolpropan, und niedermolekulare hydroxylgruppenhaltige Polyalkylenoxide auf Basis Ethylen- und/oder 1,2-Propylenoxid und den vorgenannten Diolen und/oder Triolen als Startermoleküle.

Sofern Kettenverlängerungsmittel, Vernetzungsmittel oder Mischungen davon Anwendung finden, kommen diese zweckmäßigerweise in Mengen von 1 bis 60 Gew.-%, vorzugsweise 1,5 bis 50 Gew.-% und insbesondere 2 bis 40 Gew.-%, bezogen auf das Gewicht der Komponenten (b) und (d) zum Einsatz.

Werden Katalysatoren (e) zur Herstellung der erfindungsgemäßen Hybridmaterialien eingesetzt, werden bevorzugt Verbindungen verwendet, welche die Reaktion der Hydroxylgruppen enthaltenden Verbindungen der Komponente (b) und gegebenenfalls (c) mit den organischen, gegebenenfalls modifizierten Polyisocyanaten (a) stark beschleunigen. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin. Ebenso kommen in Betracht organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinnmaleat und Dioctylzinn-diacetat, sowie Bismutcarboxylate, wie Bismut(III)-neodecanoat, Bismut-2-etyhlhexanoat und Bismut-octanoat oder Mischungen davon. Die organischen Metallverbindungen können allein oder vorzugsweise in Kombination mit stark basischen Aminen eingesetzt werden. Handelt es sich bei der Komponente (b) um einen Ester, werden vorzugsweise ausschließlich Aminkatalysatoren eingesetzt.

Vorzugsweise verwendet werden 0,001 bis 5 Gew.%, insbesondere 0,05 bis 2 Gew.% Katalysator bzw. Katalysatorkombination, bezogen auf das Gewicht der Komponente (b).

Ferner sind bei der Herstellung von Polyurethanschaumstoffen als Matrixmaterial Treibmittel (f) zugegen. Diese Treibmittel enthalten gegebenenfalls Wasser (als Bestandteil (f-1) bezeichnet). Als Treibmittel (f) können neben Wasser (f-1) noch zusätzlich allgemein bekannte chemisch und/oder physikalisch wirkende Verbindungen eingesetzt werden (dabei werden die weiteren chemischen Treibmittel als Bestandteil (f-2) und die physikalischen Treibmittel als Bestandteil (f-3) bezeichnet). Unter chemischen Treibmitteln versteht man Verbindungen, die durch Reaktion mit Isocyanat gasförmige Produkte bilden, wie Ameisensäure. Unter physikalischen Treibmitteln versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, und Ether, Ester, Ketone und/oder Acetale, beispielsweise (cyclo)aliphatische Kohlenwasserstoffe mit 4 bis 8 Kohlenstoffatomen, oder Fluorkohlenwasserstoffe, wie Solkane® 365 mfc. In einer bevorzugten Ausführungsform wird als Treibmittel eine Mischung dieser Treibmittel, enthaltend Wasser, eingesetzt, insbesondere Wasser als alleiniges Treibmittel. Wird kein Wasser als Treibmittel eingesetzt werden vorzugsweise ausschließlich physikalische Treibmittel verwendet.

Der Gehalt an (f-1) Wasser beträgt in einer bevorzugten Ausführungsform von 0,1 bis 2 Gew.-%, bevorzugt 0,2 bis 1.5 Gew.-%, besonders bevorzugt 0,3 bis 1.2 Gew.-%, insbesondere 0.4 bis 1 Gew.-%, bezogen auf das Gesamtgewicht der Komponenten (a) bis (g).

In einer weiteren bevorzugten Ausführungsform werden der Umsetzung der Komponenten (a), (b) und gegebenenfalls (d) als zusätzliches Treibmittel Mikrohohlkugeln, die physikalisches Treibmittel enthalten, zugegeben. Die Mikrohohlkugeln können auch im Gemisch mit Wasser (f-1), den vorstehend genannten chemischen Treibmitteln (f-2) und/ oder physikalischen Treibmitteln (f-3) eingesetzt werden.

Die Mikrohohlkugeln bestehen üblicherweise aus einer Hülle aus thermoplastischem Polymer und sind im Kern mit einer flüssigen, niedrig siedenden Substanz auf Basis von Alkanen gefüllt. Die Herstellung solcher Mikrohohlkugeln ist beispielsweise in US 3 615 972 beschrieben. Die Mikrohohlkugeln weisen im allgemeinen einen Durchmesser von 5 bis 50 µm auf. Beispiele für geeignete Mikrohohlkugeln sind unter dem Handelsnamen Expancell® der Firma Akzo Nobel erhältlich.

Die Mikrohohlkugeln werden im Allgemeinen in einer Menge von 0,5 bis 5 %, bezogen auf das Gesamtgewicht der Komponenten (b), (d) und (f) zugesetzt.

Der Reaktionsmischung zur Herstellung der erfindungsgemäßen Hybridmaterialien können gegebenenfalls auch noch Hilfsmittel und/oder Zusatzstoffe (g) zugegeben werden. Genannt seien beispielsweise oberflächenaktive Substanzen, Schaumstabilisatoren, Zellregler, Trennmittel, Füllstoffe, Farbstoffe, Pigmente, Hydrolyseschutzmittel, geruchsabsorbierende Substanzen und fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten oder von Fettsäuren, sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnussöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomere Acrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponente (b), angewandt.

Als geeignete Trennmittel seien beispielhaft genannt: Umsetzungsprodukte von Fettsäureestern mit Polyisocyanaten, Salze aus Aminogruppen enthaltenden Polysiloxanen und Fettsäuren, Salze aus gesättigten oder ungesättigten (cyclo)aliphatischen Carbonsäuren mit mindestens 8 C-Atomen und tertiären Aminen sowie insbesondere innere Trennmittel, wie Carbonsäureester und/oder -amide, hergestellt durch Veresterung oder Amidierung einer Mischung aus Montansäure und mindestens einer aliphatischen Carbonsäure mit mindestens 10 C-Atomen mit mindestens difunktionellen Alkanolaminen, Polyolen und/oder Polyaminen mit Molekulargewichten von 60 bis 400 (EP-A-153 639), Gemischen aus organischen Aminen, Metallsalzen der Stearinsäure und organischen Mono- und/oder Dicarbonsäuren oder deren Anhydride (DE-A-3 607 447) oder Gemischen aus einer Iminoverbindung, dem Metallsalz einer Carbonsäure und gegebenenfalls einer Carbonsäure (US 4 764 537).

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe wie silikatische Mineralien, beispielsweise Schichtsilikate wie Antigorit, Bentonit, Serpentin, Hornblenden, Amphibole, Chrisotil, Talkum; Metalloxide, wie Kaolin, Aluminiumoxide, Titanoxide, Zinkoxid und Eisenoxide, Metallsalze wie Kreide, Schwerspat und anorganische Pigmente, wie Cadmiumsulfid, Zinksulfid sowie Glas u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Russ, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern.

Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten (a) bis (c), zugegeben, wobei jedoch der Gehalt an Matten, Vliesen und Geweben aus natürlichen und synthetischen Fasern Werte bis 80 Gew.-% erreichen kann.

Die speziellen Ausgangssubstanzen (a) bis (g) für die Herstellung von erfindungsgemäßen Hybridmaterialien unterscheiden sich jeweils quantitativ und qualitativ nur geringfügig wenn als erfindungsgemäßes Polyurethan ein kompaktes Material, ein thermoplastisches Polyurethan, ein viskoelastisches Gel, ein Weichschaumstoff, ein Halbhartschaumstoff, oder ein Integralschaumstoff hergestellt werden soll. So werden beispielsweise für die Herstellung von massiven Polyurethanen keine Treibmittel eingesetzt. Weiter lässt sich beispielsweise über die Funktionalität und die Kettenlänge der höhermolekularen Verbindung mit mindestens zwei reaktiven Wasserstoffatomen die Elastizität und Härte des erfindungsgemäßen Polyurethans variieren. Viskoelastische Polyurethangele können weiter ein Dispersionsmedium, beispielsweise Wasser oder ein organisches Lösemittel, enthalten, welches dazu führt, das das Polyurethan zum Polyurethangel aufquillt. Solche Modifikationen sind dem Fachmann bekannt.

Edukte und Verfahren zur Herstellung eines kompakten Polyurethans werden beispielsweise in EP 0989146 oder EP 1460094, speziell zur Herstellung von Polyurethanbindemitteln für die Herstellung von Polyurethanschichtstoffen in DE 2 156 225 und DE 2 215 893 sowie DE 2021 682 und DE 2 821 001 und PCT/EP2007/062187, Edukte und Verfahren zur Herstellung eines Weichschaums und eines Halbhartschaums in PCT/EP2005/010124 und EP 1529792, Edukte und Verfahren zur Herstellung von Polyurethangelen in EP 511570 und DE 10024097 und Edukte und Verfahren zur Herstellung eines Integralschaumstoffs in EP 364854, US 5506275 oder EP 897402 beschrieben. Zu den in diesen Dokumenten beschriebenen Edukten werden dann jeweils noch die expandierbaren Partikel (c') bzw. die expandierten Partikel (c") zugegeben, wobei sich die Mengenverhältnisse der übrigen Ausgangsstoffe zueinander vorzugsweise jeweils nicht ändern.

In einem erfindungsgemäßen Hybridmaterial beträgt der Volumenanteil der geschäumten Partikel aus thermoplastischem Polyurethan vorzugsweise 20 Volumenprozent und mehr, besonders bevorzugt 50 Volumenprozent und mehr bevorzugt 80 Volumenprozent und mehr und insbesondere 90 Volumenprozent und mehr, jeweils bezogen auf das Volumen des erfindungsgemäßen Hybridsystems.

In einer bevorzugten Ausführungsform stellen die erfindungsgemäßen Hybridmaterialien Integralschaumstoffe dar. Dazu werden die Polyisocyanate (a) mit den Verbindungen mit gegenüber Isocyanaten reaktiven Wasserstoffatomen (b), Treibmitteln (f) und den expandierbaren Partikeln aus thermoplastischem Polyurethan (c'), die Treibmittel in dispergierter oder gelöster Form enthalten, oder den expandierten Partikeln aus thermoplastischem Polyurethan (c"), sowie gegebenenfalls Kettenverlängerern und/oder Vernetzungsmitteln (d), Katalysatoren (e), und den weiteren Additiven (g) in solchen Mengen zur Umsetzung gebracht, dass das Äquivalenzverhältnis von NCO-Gruppen der Polyisocyanate (a) zur Summe der reaktiven Wasserstoffatome der Komponenten (b) und, falls vorhanden, (d) und (f) 1 : 0,8 bis 1 : 1,25, vorzugsweise 1 : 0,9 bis 1 : 1,15 beträgt.

Die Integralschaumstoffe werden vorzugsweise nach dem one-shot-Verfahren mit Hilfe der Niederdruck- oder Hochdrucktechnik in geschlossenen, zweckmäßigerweise temperierten Formwerkzeugen hergestellt. Die Formwerkzeuge bestehen gewöhnlich aus Metall, z.B. Aluminium oder Stahl. Diese Verfahrensweisen werden beispielsweise beschrieben von Piechota und Röhr in "Integralschaumstoff", Carl-Hanser-Verlag, München, Wien, 1975, oder im KunststoffHandbuch, Band 7, Polyurethane, 3. Auflage, 1993, Kapitel 7.

Die Ausgangskomponenten werden dazu bei einer Temperatur von 15 bis 90 °C, vorzugsweise von 20 bis 35 °C gemischt und gegebenenfalls unter erhöhtem Druck in das geschlossene Formwerkzeug eingebracht. Die Vermischung kann mechanisch mittels eines Rührers oder einer Rührschnecke oder unter hohem Druck im sogenannten Gegenstrominjektionsverfahren durchgeführt werden. Die Formwerkzeugtemperatur beträgt zweckmäßigerweise 20 bis 90 °C, vorzugsweise 30 bis 60 °C.

Die Menge des in das Formwerkzeug eingebrachten Reaktionsgemisches wird so bemessen, dass die erhaltenen Formkörper aus Integralschaumstoffen eine Dichte von 0,08 bis 0,70 g/cm³, insbesondere von 0,12 bis 0,60 g/cm³ aufweisen. Die Verdichtungsgrade zur Herstellung der Formkörper mit verdichteter Randzone und zelligem Kern liegen im Bereich von 1,1 bis 8,5, vorzugsweise von 2, 1 bis 7,0.

Die erfindungsgemäßen Verfahren ermöglichen es, Hybridmaterialien mit einer Matrix aus Polyurethan und darin enthaltenen geschäumten Partikeln aus thermoplastischem Polyurethan herzustellen, bei denen eine homogene Verteilung der geschäumten Partikel vorliegt. Dabei werden insbesondere bei Einsatz von expandierbaren Partikeln (c') im Verfahren zur Herstellung der erfindungsgemäßen Hybridmaterialien nach Einbringen der Ausgangssubstanzen in die Form zur Gewährung der homogenen Verteilung keine speziellen Hilfsmittel oder Vorrichtungen benötigt. Weiter können die expandierbaren Partikel auch leicht in einem erfindungsgemäßen Verfahren eingesetzt werden, da sie aufgrund ihrer geringen Größe rieselfähig sind und keine speziellen Anforderungen an die Verarbeitung stellen.

Werden bereits expandierte Partikel (c") aus thermoplastischen Polyurethan zur Herstellung von Polyurethanintegralschaumstoffen oder kompakten Formkörpern eingesetzt, wird aufgrund der hohen Dichteunterschiede der Reaktionsmischung des noch nicht ausreagierten Matrixmaterials und den expandierten Partikeln (c") aus thermoplastischem Polyurethan eine geschlossene Form mit den expandierten Partikeln gefüllt und anschließend die Reaktionsmischung mit den übrigen Bestandteilen (a), (b) und gegebenenfalls (d), (e), (f) und (g) eingespritzt. Insbesondere bei geringen Füllgraden mit den expandierten Partikeln (c") werden gegebenenfalls Techniken zur homogenen Verteilung der expandierten Partikel (c"), wie langsame Rotation der Form, angewandt.

Die erfindungsgemäßen Hybridmaterialien, insbesondere Hybridmaterialien mit einer Matrix aus zelligem Polyurethan, zeichnen sich durch eine sehr gute Haftung des Matrixmaterials mit den expandierten Partikeln aus thermoplastischem Polyurethan aus. Dabei reißt ein erfindungsgemäßes Hybridmaterial nicht an der Grenzfläche von Matrixmaterial und expandierten Partikeln aus thermoplastischem Polyurethan. Dadurch ist es möglich, Hybridmaterialien herzustellen, die gegenüber konventionellen Polyurethanmaterialien bei gleicher Dichte verbesserte mechanische Eigenschaften, wie Weiterreißfestigkeit und Elastizität haben. So ist die Weiterreißfestigkeit in Anlehnung an ASTM D3574F eines erfindungsgemäßen Hybridmaterials mit zelliger Matrix bei einer gemittelten Dichte des Hybridmaterials von 0,4 bis 0,5 g/cm³ vorzugsweise größer als 2,5 N/mm, bei einer gemittelten Dichte des Hybridmaterials von 0,3 bis kleiner 0,4 g/cm³ vorzugsweise größer als 2,2 N/mm, bei einer gemittelten Dichte des Hybridmaterials von 0,2 bis kleiner 0,3 g/cm³ vorzugsweise größer als 2,0 N/mm und bei einer gemittelten Dichte des Hybridmaterials von 0,1 bis kleiner 0,2 g/cm³ vorzugsweise größer als 1,0N/mm. Dabei weist ein Hybridmaterial mit einer Matrix aus zelligem Polyurethan vorzugsweise eine mittlere Dichte des Hybridmaterials von 0,05 bis 0,60, besonders bevorzugt 0,01 bis 0,50 und insbesondere 0,02 bis 0,30 g/cm³ auf.

Die Elastizität erfindungsgemäßer Hybridmaterialien in Form von Integralschaumstoffen ist vorzugsweise größer 40 % und besonders bevorzugt größer 50 % nach DIN 53512.

Weiter zeigen die erfindungsgemäßen Hybridmaterialien auf Basis von Integralschaumstoffen hohe Rückprallelastizitäten bei geringer Dichte. Insbesondere Integralschaumstoffe auf Basis erfindungsgemäßer Hybridmaterialien eignen sich daher hervorragend als Materialien für Schuhsohlen. Dadurch werden leichte und komfortable Sohlen mit guten Haltbarkeitseigenschaften erhalten. Solche Materialien sind insbesondere als Zwischensohlen für Sportschuhe geeignet.

Ein weiterer Vorteil eines erfindungsgemäßen Verfahrens zur Herstellung von Hybridmaterialien ist es, dass Hybridmaterialien mit geringer gemittelter Dichte, insbesondere Integralschaumstoffe, herstellbar sind, ohne dass bei der Herstellung konventioneller Schaumstoffe mit der gleichen Dichte übliche Nachteile, wie Einfallstellen oder Hautablösestellen auftreten. Dadurch wird weniger Ausschuss erhalten, wodurch Kosten eingespart werden können.

Weitere Einsatzmöglichkeiten von erfindungsgemäßen Hybridmaterialien mit einer zelligen Matrix sind Polsterungen, beispielsweise von Möbeln, und Matratzen.

Hybridmaterialien mit einer Matrix aus einem viskoelastischen Gel zeichnen sich speziell durch eine erhöhte Viskoelastizität und verbesserte elastische Eigenschaften aus. Dies Materialien eignen sich somit ebenfalls als Polsterungsmaterialien, beispielsweise für Sitze, speziell Sattel wie Fahrradsattel oder Motorradsattel.

In einer weiteren bevorzugten Ausführungsform stellen die erfindungsgemäßen Hybridmaterialien Schichtstoffe dar, die als Bodenbeläge verwendet werden können. Zu deren Herstellung werden die expandierten Partikel (c") und Polyurethanbindemittel in Mengen von 1 bis 20 Gew.-Teilen, vorzugsweise 3 bis 10 Gew.-Teilen, expandierten Partikel (c"), bezogen auf 1 Gew.-Teil des Polyurethanbindemittels in an sich bekannter Weise gegebenenfalls unter Zusatz der nachstehend genannten Hilfs- und Zusatzstoffe, beispielsweise in einem Zwangsmischer, vermischt. Gegebenenfalls können Teile der expandierten Partikel (c") durch andere Kunststoffgranulate, beispielsweise Gummi, ersetzt werden.

Die Polyisocyanatprepolymere zur Herstellung der erfindungsgemäßen Schichtstoffe sind erhältlich, indem vorstehend beschriebene Polyisocyanate (a), beispielsweise bei Temperaturen von 30 bis 100 °C, bevorzugt bei etwa 80 °C, mit gegenüber Isocyanaten reaktiven Verbindungen (b) sowie gegebenenfalls Kettenverlängerungs- und / oder Vernetzungsmittel (d) zum Prepolymer umgesetzt werden. Dabei werden Polyisocyanat (a) und gegenüber Isocyanat reaktive Verbindung (b) sowie gegebenenfalls Kettenverlängerungs- und / oder Vernetzungsmittel (d) vorzugsweise in einem Verhältnis von Isocyanatgruppen zu gegenüber Isocyanaten reaktiven Gruppen von 1.5 : 1 bis 15 : 1, vorzugsweise 1,8 : 1 bis 8 : 1 miteinander vermischt. Besonders bevorzugt werden zur Herstellung der Prepolymere Polyisocyanate und die Verbindung mit gegenüber Isocyanaten reaktiven Gruppen und Kettenverlängerungs- und / oder Vernetzungsmittel in einem Verhältnis miteinander vermischt, dass der NCO-Gehalt des hergestellten Prepolymers im Bereich von 1,0 bis 20, insbesondere von 2 bis 15 Gew.-%, bezogen auf das Gesamtgewicht des hergestellten Isocyanatprepolymers, liegt. Anschließend können vorzugsweise flüchtige Isocyanate abgetrennt werden, vorzugsweise durch Dünnschichtdestillation. Dabei liegt die Viskosität der Polyilsocyanatprepolymere vorzugsweise bei 1000 bis 3000 mPa.s bei 25 °C. Erfindungsgemäße Polyilsocyanatprepolymere auf Basis von Toluoldiisocyanat weisen dabei typischerweise eine Viskosität von 1000 bis 1500 mPa.s auf, während erfindungsgemäße Polyilsocyanatprepolymere auf Basis von Diphenylmethandiisocyanat typischerweise eine Viskosität von 2000 bis 3000 mPa.s aufweisen, jeweils bei 25 °C.

Weiter kann die Herstellung des Isocyanatgruppen aufweisenden Prepolymers schrittweise erfolgen. Dazu wird in einem ersten Schritt die gegenüber Isocyanat reaktive Verbindung (b) sowie gegebenenfalls Kettenverlängerungs- und / oder Vernetzungsmittel (d) mit 2,4-Toluoldiisocyanat und / oder 2,6-Toluoldiisocyanat bis zu einem NCO-Gehalt von 2-5 Gew.-%, bezogen auf das erhaltene Prepolymer, umgesetzt. In einem zweiten Schritt wird das so hergestellte Prepolymer mit Isocyanaten aus der Diphenylmethandiisocyanatreihe oder deren Derivate versetzt, beispielsweise 2,4'-Diphenylmethandiisocyanat und 4,4'-Diphenylmethandiisocyanat und höherkernige Homologe des Diphenylmethandiisocyanats (Polymer-MDI) und / oder bei Raumtemperatur flüssige, modifizierte Diphenylmethandiisocyanate, insbesondere durch Carbodiimid-, Urethan-, Allophanat-, Isocyanurat-, Harnstoff- und / oder Biuretgruppen modifizierte Diphenylmethandiisocyanate, bis der NCO-Gehalt des hergestellten Prepolymers einen Wert, entsprechend den oben angegebenen Werten, aufweist. Dadurch kann der Gehalt an monomerem Isocyanat mit einer Molmasse kleiner 249 g/mol gering gehalten werden. Diese schrittweise hergestellten Polyisocyanatprepolymere weisen typischerweise eine Viskosität im Bereich von 2000 bis 3000 mPa.s bei 25 °C auf.

Zur Herstellung des Bindemittels werden dem Isocyanatprepolymer weitere Additive, wie oberflächenaktive Substanzen, Weichmacher, anorganische Füllstoffe, wie Sand, Kaolin, Kreide, Bariumsulfat, Siliziumdioxid, Oxidationsstabilisatoren, Farbstoffe und Pigmente, Stabilisatoren, z.B. gegen Hydrolyse, Licht, Hitze oder Verfärbung, anorganische und / oder organische Füllstoffe, Emulgatoren, Flammschutzmittel, Alterungsschutzmittel, Haftvermittler und Verstärkungsmittel zugegeben.

Die Aushärtung der Mischung des Polyurethanbindemittels und der expandierten Partikel (c") kann durch Zugabe weiterer gegenüber Isocyanat reaktiver Verbindungen (b) und / oder Kettenverlängerungs- oder Vernetzungsmittel (d) erfolgen, dem sogenannten Zweikomponentenverfahren. Alternativ kann die Aushärtung ausschließlich durch Einwirkung von Wasser erfolgen, dem sogenannten Einkomponentenverfahren. Vorzugsweise erfolgt die Aushärtung ausschließlich durch Einwirkung von Wasser, besonders bevorzugt durch Luftfeuchtigkeit. Eine beschleunigte Aushärtung kann durch Besprühen mit Wasser oder auch mittels Dampfbehandlung erzielt werden. Erfolgt die Herstellung des erfindungsgemäßen Schichtstoffs im Einkomponentenverfahren wird bevorzugt kein Kettenverlängerungs- oder Vernetzungsmittel (d) zur Herstellung des Isocyanatgruppen aufweisenden Prepolymers eingesetzt. Der Aushärteprozess kann durch Zumischen von in der Polyurethan-Chemie gebräuchlichen Katalysatoren e) beschleunigt werden.

Die physikalischen Eigenschaften der erfindungsgemäß hergestellten elastischen Flächengebilde, wie Elastizität, Härte, Raumgewicht und Wasserdurchlässigkeit, können durch Variation von Größe, Gestalt und Beschaffenheit der expandierten Partikel (c"), Zugabe weiterer Kunststoffgranulate, wie Gummigranulat, Bindemittelgehalt, mittlere NCO-Funktionalität des Bindemittels, Gehalt des Bindemittels an Isocyanatgruppen, Verdichtungsgrad und Aushärtebedingungen in weiten Grenzen variiert werden.

Die Formgebung des erfindungsgemäßen Schichtstoffs erfolgt üblicherweise durch Aufschütten, Verteilen und Verdichten der Mischung aus Polyurethanbindemittel und Kunststoffgranulaten mittels an sich für die Herstellung von Boden- und Straßenbelägen bekannten Maschinen und Werkzeugen auf die jeweils zu beschichtende Unterlage, wie z.B. Beton, Estrich oder Asphalt, in der gewünschten Schichtdicke, die bei den genannten Einsatzgebieten im Allgemeinen 2 bis 30 mm beträgt. Die Formgebung kann jedoch auch in gegebenenfalls beheizten Formen oder Pressen erfolgen, wobei die Flächengebilde nach der Aushärtung in Form von Platten erhalten werden, die dann ihrerseits in an sich bekannter Weise zur Herstellung der genannten Beläge verlegt werden. Vorzugsweise wird bei der Formgebung und Aushärtung in beheizten Formen oder Pressen zur beschleunigten Aushärtung Wasser, besonders bevorzugt in Form von Wasserdampf, zugegeben.

Die erfindungsgemäßen Schichtstoffe weisen gegenüber bekannten Schichtstoffen aus dem Stand der Technik eine erhöhte Haltbarkeit und Belastbarkeit auf, die sich insbesondere durch eine erhöhte Zugfestigkeit und Bruchdehnung bemerkbar macht. Darüber hinaus weisen erfindungsgemäße Schichtstoffe eine geringe Dichte auf, wodurch weniger Material eingesetzt werden kann. Weiter führt die kompakte Haut der expandierten Partikel (c") dazu, dass relativ geringe Mengen an Bindemittel benötigt werden. Schließlich kann durch den Ersatz von Gummi aus im Stand der Technik bekannten Schichtstoffen durch expandierte Partikel (c") die Emission von gesundheitlichen Dämpfen aus erfindungsgemäßen Schichtstoffen gegenüber bekannten Schichtstoffen verringert werden. Daher sind erfindungsgemäße Schichtstoffe insbesondere als Belag für Spielplätze, Leichtathletiklaufbahnen, Sportfelder und Sporthallen geeignet.

### In den folgenden Beispielen wird die Erfindung verdeutlicht:

### Herstellung der expandierbaren Partikel:

Ausgehend von einem Mol eines Polyesterpolyols mit einem zahlenmittleren Molekulargewicht von 800 g/mol auf Basis von Adipinsäure und Butan-1,4-diol wurde durch Umsetzung mit 0,44 Mol Butan-1,4-diol und 1,44 Mol 4,4'-MDI ein Granulat eines thermoplastischen Polyurethans (TPU A) mit einem mittleren Teilchengewicht von ca. 2 mg hergestellt. Weiter wurde analog ausgehend von einem Mol Polytetrahydrofuran mit einem zahlenmittleren Molekulargewicht von 1333 g/Mol durch Umsetzung mit 0,97 Mol Butan-1,4-diol und 1,97 Mol 4,4'-MDI ein Granulat eines thermoplastischen Polyurethans (TPU B) mit einem mittleren Teilchengewicht von ebenfalls ca. 2 mg hergestellt.

In einem Autoklaven wurden nacheinander jeweils 100 Gewichtsteile des thermoplastischen Polyurethans A (TPU A) und B (TPU B) mit jeweils 250 Teilen Wasser, 6,7 Teilen Tricalciumphosphat sowie 20 Teilen n-Butan unter Rühren vermischt und auf die in Tabelle 1 angegebene Temperatur erhitzt. Danach wurde der Inhalt des Druckgefäßes durch ein Bodenventil ausgetragen und entspannt, wobei der Druck im Kessel durch Nachpressen von Stickstoff bzw. des eingesetzten Treibmittels konstant gehalten wurde. Die Schaumpartikel wurden durch Waschen mit Salpetersäure und Wasser von den anhaftenden Hilfsmittelresten befreit und bei 50°C mit Luft getrocknet.

Die Imprägnierbedingungen und die erhaltenen Schüttdichten der expandierten Partikel finden sich in Tabelle 1.

**Tabelle 1**

| TPU | n-Butan [Gew.-Teile] | Temperatur [°C] | Schüttdichte [g/L] |
|---|---|---|---|
| TPU A | 20 | 112 | 300 |
| TPU A | 20 | 114 | 170 |
| TPU B | 20 | 119 | 240 |
| TPU B | 20 | 120 | 190 |
| TPU B | 20 | 122 | 140 |
| TPU B | 20 | 125 | 120 |

### Herstellung eines Hybridmaterials als Integralschaumstoff (Beispiel 1)

Es wurde eine auf 50°C temperierte Aluminiumform der Abmessungen 20x20x4 cm verwendet. Die Form wurde zunächst bis zum Rand mit 160 g bereits expandierten TPU-Perlen und anschließend mit 400 g Reaktionsmischung gemäß Tabelle 2 befüllt. Dabei stellt die Matrixformulierung aus Beispiel 1 eine gewöhnliche Polyurethan-mischung zur Herstellung von Integralschaumstoffen mit mittlerer Dichte dar. Die Formulierung zu V1 stellt eine Formulierung für niederdichte Systeme dar, bei der zum Erhalt der Mechanischen Eigenschaften ein Polymerpolyol zugegeben wird. Die Form wird verschlossen und das Formteil nach 5 Min. entformt.

Die Zusammensetzung sowie die mechanischen Eigenschaften der Schäume sind in Tabelle 2 zusammengefasst:

**Tabelle 2: Zusammensetzung und mechanische Eigenschaften von Hybridschäumen (1) und konventionellen niederdichten Schäumen (V1)**

| | **Beispiel 1** | **V1** |
|---|---|---|
| Polyol 1 | 25,0 | 25,0 |
| Polyol 2 | 57,0 | 32,9 |
| Polyol 3 | - | 29,7 |
| Kettenverlängerer | 13,0 | 8,8 |
| Wasser | 0,6 | 1,1 |
| Amin-Kat. | 3,0 | 1,6 |
| Zinn-Kat. | 0,05 | 0,2 |
| Zellregulator | 0,4 | - |
| ExTPU | + | - |
| B: Iso-Komp. | | |
| Iso 1 | 133,1 | - |
| Iso 2 | - | 112,6 |
| Index | 98 | 100 |
| Mechanik | | |
| Dichte [g/L] | 300 | 300 |
| Dichte der Matrix [g/L] | 550 | 300 |
| Härte [Asker C] | 56-58 | 56-58 |
| Split tear [N/mm] | 3,8 | 2,4 |
| Rückprallelastizität [%] | 51 | 46 |

Isocyanat-Komponenten. Als Isocyanat-Komponenten wurden Isocyanat-Prepolymere auf Basis von MDI und Polyetherol-Mischungen mit einem NCO-Gehalt von 13,9 % (Iso 1) bzw. 18 % (Iso 2) eingesetzt.

Polyol 1 stellt ein Polyetherol auf Basis von Propylenoxid/Ethylenoxid mit einer OH-Zahl von 29 mg KOH/g und einer Funktionalität, bezogen auf den Starter, von 2 dar. Polyol 2 stellt ein Polyetherol auf Basis von Propylenoxid/Ethylenoxid mit einer OH-Zahl von 27 mg KOH/g und einer Funktionalität, bezogen auf den Starter, von 3 dar. Polyol 3 stellt ein Polymerpolyetherol mit einem Feststoffgehalt von 45 % und einer OH-Zahl von 20 mg KOH/g dar. Der Kettenverlängerer besteht aus einem Gemisch aus 1,4-Butandiol und Ethylenglykol. Als Amin-Katalysator wurde ein Gemisch aus tertiären Aminen in Glykolen eingesetzt. Der Zellregulator stellt ein grenzflächenaktives Silikonpolymer dar.

Die Bestimmung der Weiterreißfestigkeit (Split tear) erfolgte nach ASTM D3574F.
Die Bestimmung der Rückprallelastizität erfolgte nach DIN 53512.

Tabelle 2 zeigt, dass ein Hybridmaterial gemäß Beispiel 1 im Vergleich zu dem Schaum nach V1 bei gleicher Dichte und gleicher Härte eine deutlich verbesserte Weiterreißfestigkeit und eine verbesserte Rückprallelastizität aufweist und sich daher hervorragend zur Verwendung in Schuhsohlen eignet.

### Herstellung eines Hybridmaterials als Schichtstoff

Ausgehend von 36 Gew.-Teilen Isocyanat 1, einem Diphenylmethandiisocyanat mit einem NCO-Gehalt von 32,2%, 2 Gew.-Teilen Isocyanat 2, einem modifizierten Diphenylmethandiisocyanat mit einem NCO-Gehalt von 29,5 % und 62 Gew.-Teilen eines Polyetherols auf Basis von Propylenoxid mit einer OH-Zahl von 56 mg KOH/g wurde ein Isocyanatprepolymer mit einem NCO-Gehalt von 10 Gew.-% hergestellt.

40 g des hergestellten Isocyanatprepolymers (Prepo) und 200 g expandierte TPU-Perlen mit einem durchschnittlichen Teilchendurchmesser von ca. 2 mm (ExTPU1) wurden in einem Eimer aus Polypropylen, Fassungsvermögen 2,75 L, mit einem Vollrathrührer bei 700 Umdrehungen/Minute zwei Minuten lang vermischt. Anschließend wurde die Mischung in einen Holzrahmen der Maße 20 x 20 x 1,5 cm gefüllt und auf ca. 1,5 cm Dicke verdichtet. Die erhaltenen Schichtstoffe wurden über Nacht in einem entlüfteten Laborschrank aufbewahrt, nach weiteren 24 Stunden Lagerung bei Normklima (23 °C, 50 % rel. Luftfeuchtigkeit) entformt und weitere 5 Tage bei Normklima gelagert (Beispiel 2).

Beispiel 3 wurde analog zu Beispiel 2 durchgeführt, wobei 60 Gew.-% der expandierten TPU-Perlen durch technisches Recyclinggummi auf Basis eines Blends aus Styrol-Butadien-Kautschuk (SBR) und Isobuten-Isopren-Kautschuk (Gummi) ersetzt wurden.

Beispiel 4 wurde analog zu Beispiel 2 durchgeführt, wobei anstelle der expandierten TPU-Perlen mit einem durchschnittlichen Teilchendurchmesser von ca. 2 mm expandierten TPU-Perlen mit einem durchschnittlichen Teilchendurchmesser von ca. 7 mm (ExTPU2) eingesetzt wurden.

Beispiel 5 wurde analog zu Beispiel 4 durchgeführt, wobei 40 Gew.-% der expandierten TPU-Perlen durch technisches Recyclinggummi auf Basis eines Blends aus Styrol-Butadien-Kautschuk (SBR) und Isobuten-Isopren-Kautschuk ersetzt wurden.

Vergleichbeispiel 2 wurde analog zu Beispiel 2 durchgeführt, wobei die expandierten TPU-Perlen durch technisches Recyclinggummi auf Basis eines Blends aus Styrol-Butadien-Kautschuk (SBR) und Isobuten-Isopren-Kautschuk ersetzt wurden.

Zur Bestimmung der mechanischen Eigenschaften der ausgehärteten Schaumplatten werden aus jeder Platte je vier Zugstäbe mit einer Stegbreite von 25 mm gestanzt. An diesen Zugstreifen werden die Zugfestigkeit und die Bruchdehnung in Anlehnung an DIN EN ISO 1856 ermittelt, wobei abweichend von dieser Norm eine Stegbreite von 25 mm und eine Zuggeschwindigkeit von 100 mm/min verwendet wurden. Anschließend wurde aus den Ergebnissen für jeweils eine Platte der Mittelwert gebildet. Die Ergebnisse dieser Messungen sowie die Dichte der Probekörper sind in Tabelle 3 angegeben.

**Tabelle 3 zeigt, dass ein Hybridmaterial nach den Beispielen 2 bis 5 gegenüber Vergleich 2 eine verbesserte Zugfestigkeit und eine verbesserte Bruchdehnung bei geringerer Dichte aufweist.**

| | Beispiel 2 | Beispiel 3 | Beispiel 4 | Beispiel 5 | V2 |
|---|---|---|---|---|---|
| Ex TPU1 [Gew.-Teile] | 100 | 40 | | | |
| Ex TPU2 [Gew.-Teile] | | | 100 | 60 | |
| Gummi [Gew.-Teile] | | 60 | | 40 | 100 |
| Prepo [Gew.-Teile] | 20 | 20 | 20 | 20 | 20 |
| | | | | | |
| Zugfestigkeit [kPa] | 967 | 282 | 278 | 348 | 251 |
| Bruchdehnung [%] | 235 | 95 | 82 | 107 | 22 |
| Dichte [kg/m³] | 289,6 | 463,1 | 204,5 | 305,1 | 720,4 |

## Patentansprüche

1. Hybridmaterial, enthaltend eine Matrix aus Polyurethan und darin enthaltenen geschäumten Partikeln aus thermoplastischem Polyurethan, wobei die geschäumten Partikel eine geschlossene Oberflächenhaut aufweisen.

2. Hybridmaterial nach Anspruch 1, **dadurch gekennzeichnet, dass** die geschäumten Partikel einen Durchmesser von 0,1 mm bis 10 cm aufweisen und kugelförmig oder ellipsoid sind.

3. Hybridmaterial nach Anspruch 2, **dadurch gekennzeichnet, dass** die geschäumten Partikel einen Durchmesser von 0,5 mm bis 5 cm aufweisen.

4. Hybridmaterial nach Anspruch 1 bis 3, **dadurch gekennzeichnet, dass** die geschäumten Partikel eine Dichte von 0,005 bis 0,50 g/cm³ aufweisen.

5. Hybridmaterial nach Anspruch 1 bis 4, **dadurch gekennzeichnet, dass** das thermoplastische Polyurethan der geschäumten Partikel auf Polytetrahydrofuran mit einem zahlenmittleren Molekulargewicht von 600 bis 2500 g/mol basiert.

6. Hybridmaterial nach Anspruch 1 bis 5, **dadurch gekennzeichnet, dass** das thermoplastische Polyurethan der geschäumten Partikel auf Polyesteralkohol mit einem zahlenmittleren Molekulargewicht von 500 bis 2500 g/mol, basiert.

7. Hybridmaterial nach Anspruch 1 bis 6, **dadurch gekennzeichnet, dass** die Matrix aus Polyurethan ein Schaum, ein kompaktes elastomeres System oder ein Gel ist.

8. Hybridmaterial nach Anspruch 7, **dadurch gekennzeichnet, dass** die Matrix ein kompaktes Material ist und das Gewichtsverhältnis von Matrix zu geschäumten Partikeln 1 : 1 bis 1 : 20 beträgt.

9. Hybridmaterial nach Anspruch 1 bis 7, **dadurch gekennzeichnet, dass** die Matrix ein Schaumstoff mit einer Dichte von 0,03 bis 0,8 g/cm³ ist.

10. Hybridmaterial nach Anspruch 1 bis 9 **dadurch gekennzeichnet, dass** die Weiterreißfähigkeit bei einer gemittelten Dichte des Hybridmaterials von 0,4 bis 0,5 g/cm³ größer als 2,5 N/mm, bei einer gemittelten Dichte des Hybridmaterials von 0,3 bis kleiner 0,4 g/cm³ größer als 2,2 N/mm, bei einer gemittelten Dichte des Hybridmaterials von 0,2 bis kleiner 0,3 g/cm³ größer als 2,0 N/mm und bei einer gemittelten Dichte des Hybridmaterials von 0,1 bis kleiner 0,2 g/cm³ größer als 1,0 N/mm beträgt.

11. Verwendung eines Hybridmaterials nach Anspruch 1 bis 10 als Schuhsohle, Fahrradsattel oder Polsterungen.

12. Verwendung eines Hybridmaterials nach Anspruch 7 als Bodenbelag, insbesondere für Sportflächen, Leichtathletiklaufbahnen, Sporthallen, Kinderspielplätzen und Gehwege.

13. Verfahren zur Herstellung eines Hybridmaterials, enthaltend eine Matrix aus Polyurethan und darin enthaltenen geschäumten Partikeln aus thermoplastischen Polyurethan, **dadurch gekennzeichnet, dass** man
a) Polyisocyanate mit
b) Verbindungen mit gegenüber Isocyanaten reaktiven Wasserstoffatomen
c) expandierbaren Partikeln (c') aus thermoplastischem Polyurethan, die Treibmittel in dispergierter oder gelöster Form enthalten,
sowie gegebenenfalls
d) Kettenverlängerern und/oder Vernetzungsmitteln,
e) Katalysatoren,
f) Treibmitteln und
g) weiteren Additiven
vermischt und zum Hybridmaterial umsetzt, wobei die Umsetzung unter Bedingungen erfolgt, die zur Expansion der expandierbaren Partikel (c') führen, so dass die geschäumten Partikel eine geschlossene Oberflächenhaut aufweisen.

14. Verfahren zur Herstellung eines Hybridmaterials nach Anspruch 13, **dadurch gekennzeichnet, dass** die expandierbaren Partikel (c') eine Shore-Härte von A 44 bis A 84 aufweisen.

15. Verfahren zur Herstellung eines Hybridmaterials nach Anspruch 13 oder 14, **dadurch gekennzeichnet, dass** der Schmelzbereich der expandierbaren Partikel (c') bei einer DSC-Messung mit einer Aufheizrate von 20 K/min unterhalb von 130°C beginnt und bei denen das thermoplastische Polyurethan bei 190°C und einem Auflagegewicht von 21,6 kg nach DIN EN ISO 1133 höchstens eine Schmelzflussrate (MFR) von 250g/10 min aufweist.

16. Verfahren zur Herstellung eines Hybridmaterials nach Anspruch 13 bis 15, **dadurch gekennzeichnet, dass** die expandierbaren Partikel (c') einen mittleren Durchmesser von 0,1 und 10 mm aufweist.

17. Verfahren zur Herstellung eines Hybridmaterials nach Anspruch 13 bis 16, **dadurch gekennzeichnet, dass** die expandierbaren Partikel (c') einen Gehalt an Treibmittel, bezogen auf das Gesamtgewicht der Artikel (c') von 1 bis 50 Gew.-% aufweisen.

18. Verfahren zur Herstellung eines Hybridmaterials nach Anspruch 13 bis 17, **dadurch gekennzeichnet, dass** die Umsetzung bei einer Temperatur der Reaktionsmischung von 100 bis 140°C erfolgt.

19. Verfahren zur Herstellung eines Hybridmaterials, enthaltend eine Matrix aus Polyurethan und darin enthaltenen geschäumten Partikeln aus thermoplastischen Polyurethan, **dadurch gekennzeichnet, dass** man
a) Polyisocyanate mit
b) Verbindungen mit gegenüber Isocyanaten reaktiven Wasserstoffatomen
c) expandierten Partikeln (c") aus thermoplastischem Polyurethan sowie gegebenenfalls
d) Kettenverlängerern und/oder Vernetzungsmitteln,
e) Katalysatoren,
f) Treibmitteln und
g) weiteren Additiven
vermischt und zum Hybridmaterial umsetzt, wobei die geschäumten Partikel eine geschlossene Oberflächenhaut aufweisen.

20. Verfahren zur Herstellung eines Hybridmaterials nach Anspruch 19, **dadurch gekennzeichnet, dass** die expandierten Partikel (c") einen Durchmesser von 0,1 mm bis 10 cm, vorzugsweise von 0,5 mm bis 5 cm und besonders bevorzugt von 1 mm bis 2 cm aufweisen und kugelförmig oder ellipsoid sind.

21. Verfahren zur Herstellung eines Hybridmaterials nach Anspruch 18 oder 19, **dadurch gekennzeichnet, dass** die expandierten Partikel eine Dichte von 0,005 bis 0,50 g/cm³, haben und eine kompakte äußere Haut aufweisen.

22. Verfahren nach einem den Ansprüche 19 bis 21, **dadurch gekennzeichnet, dass** keine Treibmittel eingesetzt werden.

23. Verfahren nach Anspruch 22, **dadurch gekennzeichnet, dass** man zuerst aus Polyisocyanaten a) und Verbindungen mit gegenüber Isocyanaten reaktiven Wasserstoffatomen b) sowie gegebenenfalls Kettenverlängerungs- und/oder Vernetzungsmitteln d), Katalysatoren e) und weiteren Additiven f) ein Isocyanatprepolymer mit einem NCO-Gehalt von 1 bis 20 Gew.-% herstellt und anschließend das Isocyanatprepolymer mit den expandierten Partikeln (c") aus thermoplastischem Polyurethan vermischt und den Verbundstoff durch Einwirkung von Wasser aushärten lässt.

24. Verfahren nach Anspruch 22 oder 23, **dadurch gekennzeichnet, dass** das Gewichtsverhältnis der Komponenten (a), (b) und (d) bis (g) zu Komponente (c") 1 : 1 bis 1 : 20 beträgt.

## Claims

1. A hybrid material comprising a matrix of polyurethane and foamed particles of thermoplastic polyurethane comprised therein, wherein the foamed particles have a closed surface skin.

2. The hybrid material according to claim 1, wherein the foamed particles have a diameter of from 0.1 mm to 10 cm and are spherical or ellipsoidal.

3. The hybrid material according to claim 2, wherein the foamed particles have a diameter of from 0.5 mm to 5 cm.

4. The hybrid material according to any of claims 1 to 3, wherein the foamed particles have a density of from 0.005 to 0.50 g/cm³.

5. The hybrid material according to any of claims 1 to 4, wherein the thermoplastic polyurethane of the foamed particles is based on polytetrahydrofuran having a number average molecular weight of from 600 to 2500 g/mol.

6. The hybrid material according to any of claims 1 to 5, wherein the thermoplastic polyurethane of the foamed particles is based on polyester alcohol having a number average molecular weight of from 500 to 2500 g/mol.

7. The hybrid material according to any of claims 1 to 6, wherein the matrix of polyurethane is a foam, a compact elastomeric system or a gel.

8. The hybrid material according to claim 7, wherein the matrix is a compact material and the weight ratio of matrix to foamed particles is from 1:1 to 1:20.

9. The hybrid material according to any of claims 1 to 7, wherein the matrix is a foam having a density of from 0.03 to 0.8 g/cm³.

10. The hybrid material according to any of claims 1 to 9, wherein the tear propagation resistance is greater than 2.5 N/mm at an average density of the hybrid material of from 0.4 to 0.5 g/cm³, greater than 2.2 N/mm at an average density of the hybrid material of from 0.3 to < 0.4 g/cm³, greater than 2.0 N/mm at an average density of the hybrid material of from 0.2 to < 0.3 g/cm³ and greater than 1.0 N/mm at an average density of the hybrid material of from 0.1 to < 0.2 g/cm³.

11. The use of a hybrid material according to any of claims 1 to 10 as shoe sole, bicycle saddle or upholstery.

12. The use of a hybrid material according to claim 7 as floor covering, in particular for sports areas, athletics tracks, sports halls, children's playgrounds and footpaths.

13. A process for producing a hybrid material comprising a matrix of polyurethane and foamed particles of thermoplastic polyurethane comprised therein, which comprises mixing
a) polyisocyanates with
b) compounds having hydrogen atoms which are reactive toward isocyanates,
c) expandable particles (c') of thermoplastic polyurethane which comprise blowing agents in dispersed or dissolved form
and optionally,
d) chain extenders and/or crosslinkers,
e) catalysts,
f) blowing agents and
g) further additives
and reacting the mixture to form the hybrid material, with the reaction being carried out under conditions which lead to expansion of the expandable particles (c') so that the foamed particles have a closed surface skin.

14. The process for producing a hybrid material according to claim 13, wherein the expandable particles (c') have a Shore hardness of from A44 to A84.

15. The process for producing a hybrid material according to claim 13 or 14, wherein the melting range of the expandable particles (c') in a DSC measurement at a heating rate of 20 K/min commences below 130°C and the thermoplastic polyurethane has a melt flow rate (MFR) of not more than 250 g/10 min at 190°C under a weight of 21.6 kg in accordance with DIN EN ISO 1133.

16. The process for producing a hybrid material according to any of claims 13 to 15, wherein the expandable particles (c') have an average diameter of from 0.1 to 10 mm.

17. The process for producing a hybrid material according to any of claims 13 to 16, wherein the expandable particles (c') have a content of blowing agent, based on the total weight of the particles (c'), of from 1 to 50% by weight.

18. The process for producing a hybrid material according to any of claims 13 to 17, wherein the reaction is carried out at a temperature of the reaction mixture of from 100 to 140°C.

19. A process for producing a hybrid material comprising a matrix of polyurethane and foamed particles of thermoplastic polyurethane comprised therein, which comprises mixing
a) polyisocyanates with
b) compounds having hydrogen atoms which are reactive toward isocyanates,
c) expanded particles (c") of thermoplastic polyurethane and optionally
d) chain extenders and/or crosslinkers,
e) catalysts,
f) blowing agents and
g) further additives
and reacting the mixture to form the hybrid material, with the foamed particles having a closed surface skin.

20. The process for producing a hybrid material according to claim 19, wherein the expanded particles (c") have a diameter of from 0.1 mm to 10 cm, preferably from 0.5 mm to 5 cm and particularly preferably from 1 mm to 2 cm, and are spherical or ellipsoidal.

21. The process for producing a hybrid material according to claim 18 or 19, wherein the expanded particles have a density of from 0.005 to 0.50 g/cm³ and have a compact outer skin.

22. The process according to any of claims 19 to 21, wherein no blowing agent is used.

23. The process according to claim 22, wherein an isocyanate prepolymer having an NCO content of from 1 to 20% by weight is firstly prepared from polyisocyanates a) and compounds having hydrogen atoms which are reactive toward isocyanates b) and optionally chain extenders and/or crosslinkers d), catalysts e) and further additives f) and the isocyanate prepolymer is subsequently mixed with the expanded particles (c") of thermoplastic polyurethane and the composite is allowed to cure by action of water.

24. The process according to claim 22 or 23, wherein the weight ratio of the components (a), (b) and (d)-(g) to component (c") is from 1:1 to 1:20.

## Revendications

1. Matériau hybride, contenant une matrice de polyuréthane et des particules moussées en polyuréthane thermoplastique contenues dans celle-ci, les particules moussées présentant une peau de surface fermée.

2. Matériau hybride selon la revendication 1, **caractérisé en ce que** les particules moussées présentent un diamètre de 0,1 mm à 10 cm, et sont sphériques ou ellipsoïdales.

3. Matériau hybride selon la revendication 2, **caractérisé en ce que** les particules moussées présentent un diamètre 0,5 mm à 5 cm.

4. Matériau hybride selon les revendications 1 à 3, **caractérisé en ce que** les particules moussées présentent une densité de 0,005 à 0,50 g/cm³.

5. Matériau hybride selon les revendications 1 à 4, **caractérisé en ce que** le polyuréthane thermoplastique des particules moussées est à base d'un polytétrahydrofurane ayant un poids moléculaire moyen en nombre de 600 à 2 500 g/mol.

6. Matériau hybride selon les revendications 1 à 5, **caractérisé en ce que** le polyuréthane thermoplastique des particules moussées est à base d'un polyester-alcool ayant un poids moléculaire moyen en nombre de 500 à 2 500 g/mol.

7. Matériau hybride selon les revendications 1 à 6, **caractérisé en ce que** la matrice de polyuréthane est une mousse, un système élastomère compact ou un gel.

8. Matériau hybride selon la revendication 7, **caractérisé en ce que** la matrice est un matériau compact, et le rapport en poids entre la matrice et les particules moussées est de 1:1 à 1:20.

9. Matériau hybride selon les revendications 1 à 7, **caractérisé en ce que** la matrice est une mousse ayant une densité de 0,03 à 0,8 g/cm³.

10. Matériau hybride selon les revendications 1 à 9, **caractérisé en ce que** l'aptitude à la propagation d'une déchirure à une densité moyenne du matériau hybride de 0,4 à 0,5 g/cm³ est supérieure à 2,5 N/mm, à une densité moyenne du matériau hybride de 0,3 à moins de 0,4 g/cm³ supérieure à 2,2 N/mm, à une densité moyenne du matériau hybride de 0,2 à moins de 0,3 g/cm³ supérieure à 2,0 N/mm et à une densité moyenne du matériau hybride de 0,1 à moins de 0,2 g/cm³ supérieure à 1,0 N/mm.

11. Utilisation d'un matériau hybride selon les revendications 1 à 10 en tant que semelle de chaussure, selle de vélo ou rembourrage.

12. Utilisation d'un matériau hybride selon la revendication 7 en tant que revêtement de sol, notamment pour surfaces de sport, pistes d'athlétisme, salles de sport, terrains de jeux pour enfants et trottoirs.

13. Procédé de fabrication d'un matériau hybride contenant une matrice de polyuréthane et des particules moussées en polyuréthane thermoplastique contenues dans celle-ci, **caractérisé en ce que**
a) des polyisocyanates sont mélangés avec
b) des composés contenant des atomes d'hydrogène réactifs avec les isocyanates,
c) des particules expansibles (c') en polyuréthane thermoplastique, qui contiennent des agents gonflants sous forme dispersée ou dissoute,
ainsi qu'éventuellement
d) des allongeurs de chaînes et/ou des agents de réticulation,
e) des catalyseurs,
f) des agents gonflants et
g) d'autres additifs,
et mis en réaction pour former le matériau hybride, la mise en réaction ayant lieu dans des conditions qui conduisent à l'expansion des particules expansibles (c'), de telle sorte que les particules moussées présentent une peau de surface fermée.

14. Procédé de fabrication d'un matériau hybride selon la revendication 13, **caractérisé en ce que** les particules expansibles (c') présentent une dureté Shore de A 44 à A 84.

15. Procédé de fabrication d'un matériau hybride selon la revendication 13 ou 14, **caractérisé en ce que** la plage de fusion des particules expansibles (c') lors d'une mesure de DSC avec un taux de chauffe de 20 K/min débute en dessous de 130 °C, et le polyuréthane thermoplastique présente à 190 °C et à une charge de 21,6 kg selon DIN EN ISO 1133 au plus un indice de fluidité à chaud (MFR) de 250 g/10 min.

16. Procédé de fabrication d'un matériau hybride selon les revendications 13 à 15, **caractérisé en ce que** les particules expansibles (c') présentent un diamètre moyen de 0,1 à 10 mm.

17. Procédé de fabrication d'un matériau hybride selon les revendications 13 à 16, **caractérisé en ce que** les particules expansibles (c') présentent une teneur en agents gonflants, par rapport au poids total des particules (c'), de 1 à 50 % en poids.

18. Procédé de fabrication d'un matériau hybride selon les revendications 13 à 17, **caractérisé en ce que** la réaction a lieu à une température du mélange réactionnel de 100 à 140 °C.

19. Procédé de fabrication d'un matériau hybride, contenant une matrice de polyuréthane et des particules moussées en polyuréthane thermoplastique contenues dans celle-ci, **caractérisé en ce que**
a) des polyisocyanates sont mélangés avec
b) des composés contenant des atomes d'hydrogène réactifs avec les isocyanates,
c) des particules expansées (c") en polyuréthane thermoplastique, ainsi qu'éventuellement
d) des allongeurs de chaînes et/ou des agents de réticulation,
e) des catalyseurs,
f) des agents gonflants et
g) d'autres additifs,
et mis en réaction pour former le matériau hybride, les particules moussées présentant une peau de surface fermée.

20. Procédé de fabrication d'un matériau hybride selon la revendication 19, **caractérisé en ce que** les particules expansées (c") présentent un diamètre de 0,1 mm à 10 cm, de préférence de 0,5 mm à 5 cm et de manière particulièrement préférée de 1 mm à 2 cm, et sont sphériques ou ellipsoïdales.

21. Procédé de fabrication d'un matériau hybride selon la revendication 18 ou 19, **caractérisé en ce que** les particules expansées ont une densité de de 0,005 à 0,50 g/cm³, et présentent une peau extérieure compacte.

22. Procédé selon l'une quelconque des revendications 19 à 21, **caractérisé en ce qu'**aucun agent gonflant n'est utilisé.

23. Procédé selon la revendication 22, **caractérisé en ce qu'**un prépolymère d'isocyanate ayant une teneur en NCO de 1 à 20 % en poids est tout d'abord fabriqué à partir des polyisocyanates a) et des composés contenant des atomes d'hydrogène réactifs avec les isocyanates b), ainsi qu'éventuellement des allongeurs de chaînes et/ou des agents de réticulation d), des catalyseurs e) et des autres additifs f), puis le prépolymère d'isocyanate est mélangé avec les particules expansées (c") en polyuréthane thermoplastique et le matériau composite est laissé durcir sous l'effet d'eau.

24. Procédé selon la revendication 22 ou 23, **caractérisé en ce que** le rapport en poids entre les composants (a), (b) et (d) à (g) et le composant (c") est de 1:1 à 1:20.
